# EUROPÄISCHE PATENTSCHRIFT

(11) **EP 1 441 081 B1**
(45) Veröffentlichungstag und Bekanntmachung des Hinweises auf die Patenterteilung: **13.02.2008**
(21) Anmeldenummer: 03028088.7
(22) Anmeldetag: 09.12.2003
(51) Int. Cl.: E04B 1/58

(54) **Verbinder für Profile und Verbindungsanordnung**
Connector for profiles and connector assembly
Connecteur pour profilés et ensemble de connexion

(30) Priorität: 15.01.2003 DE 20300637 U
(43) Veröffentlichungstag der Anmeldung: 28.07.2004
(73) Patentinhaber: VIEGA GmbH & Co. KG, 57439 Attendorn (DE)
(72) Erfinder: Viegener, Walter, 57439 Attendorn (DE)
(74) Vertreter: Cohausz & Florack

(56) Entgegenhaltungen:
- DE-A1- 4 418 746
- DE-A1- 10 060 597
- DE-A1- 10 116 322
- FR-A- 2 653 798

## Beschreibung

Die vorliegende Erfindung betrifft einen Verbinder für Profile, insbesondere für Profile zur Herstellung von Sanitärinstallationen, mit zwei einander gegenüberliegenden Platten, die über mindestens eine Schraube und ein Zwischenstück miteinander verbunden sind und klemmend an einem Profil festlegbar sind, wobei an äußeren Kanten der Platten Vorsprünge ausgebildet sind, die in Eingriff mit an den Profilen vorgesehenen Nuten bringbar sind, sowie eine Verbindungsanordnung.

Aus der FR-A-2 653 798 ist ein Verbinder für Profile bekannt, bei dem zwei gegenüberliegende Platten an ihren Kanten verdickte Endabschnitte aufweisen, die in entsprechende Nuten an den Profilen eingepasst werden können. Zwei Profile werden dadurch verbunden, dass die Platten des Verbinders über Schrauben aneinander angezogen werden und somit der Verbinder zwei Profile klemmend festlegt.

Ferner ist aus der DE-A-100 60 597 ein Verbinder für rohrförmige Profilstäbe bekannt, welche einen im wesentlichen quadratischen Querschnitt aufweisen, wobei an den Ecken der Profilstäbe diagonal gegenüberliegende Nuten eingeformt sind. Dieser bekannte Verbinder weist zwei Platten auf, welche mit einer Schraube lösbar an wenigstens einem Profilstab befestigbar sind und dabei jeweils mit geneigten Spannflächen in die Nuten von einem oder mehreren Profilstäben einfassen. Die beiden Platten sind dabei von einer Feder in Form eines gummielastischen Elements aus Moosgummi auf einen bestimmten Abstand zueinander gehalten, so dass die Platten des Verbinders elastisch federnd in die Nuten der Profilstäbe einschnappen können.

Bei diesen vorbekannten Verbindern besteht der Nachteil, dass diese sich nur an geschlossenen Profilstäben, die eine innere Hohlkammer besitzen, einsetzen lassen. Solche geschlossenen Profile lassen sich ohne Kern in einer Stanze oder Pressmaschine nur schlecht ablängen. Da die Profile in der Länge meist mehrere Meter lang sind ist es nicht möglich, einen entsprechenden Kern von mehreren Metern in das Profil einzuschieben. Deshalb müssen geschlossene Profile aufwendig mittels einer Säge gekürzt werden, um eine Deformierung des Profils im Bereich der Trennstelle zu vermeiden.

Für das Ablängen von Profilen ist es ferner bekannt, offene Profile vorzusehen, die an einer Seite zur Einfuhrung eines Kerns geöffnet sind. Solche Profile können dann entsprechend fixiert und abgelängt werden. Zusätzlich können auch erforderliche Bohrungen und Ausstanzungen vorgesehen werden. An der offenen Seite können diese Profile jedoch nicht mit einem oben beschriebenen Verbinder festgeklemmt werden, da die Profile hierfür nicht eine ausreichende Stabilität besitzen.

Der vorliegenden Erfindung liegt die Aufgabe zugrunde, einen Verbinder und eine Verbindungsanordnung zu schaffen, die sowohl für geschlossene Profile als auch für offene Profile eingesetzt werden können und sich auf einer Baustelle effektiv montieren lassen.

Diese Aufgabe wird durch einen Verbinder mit den Merkmalen des Anspruchs 1 sowie durch eine Verbindungsanordnung mit den Merkmalen des Anspruchs 10 gelöst.

Erfindungsgemäß ist an dem Zwischenstück zwischen den äußeren Kanten der Platten mindestens ein hervorstehender Abstandshalter angeordnet, der zur Abstützung eines offenen Profils zwischen zwei gegenüberliegenden Wandabschnitten des jeweiligen offenen Profils einfügbar ist, wobei der Abstandshalter federnd ausgebildet ist und zur Anordnung an einer geschlossenen Seite eines offenen oder geschlossenen Profils von einer hervorstehenden Position in eine zurückgezogene Position bewegbar ist.
Dadurch kann der Verbinder auch bei offenen c-förmigen Profilen eingesetzt werden, die auf der Baustelle wesentlich einfacher abgelängt und bearbeitet werden können als geschlossene Hohlprofile. Der Abstandshalter wird zwischen zwei Seitenwänden eingefügt, sodass dann die Platten klemmend von außen auf das Profil gedrückt werden können, wobei der Abstandshalter dann die entstehenden Druckkräfte aufnehmen kann und eine größere Verformung des c-förmigen Profils verhindert.
Dadurch können jegliche offenen Profile verwendet werden, in die ein Kern einschiebbar ist, um ein einfaches Ablängen auf der Baustelle zu ermöglichen. Ferner können offene Profile auch einfacher direkt auf eine Wand oder einem Boden mit innerhalb des Profils versenkt angeordneten Befestigungsmitteln montiert werden.

Insbesondere kann der Verbinder wahlweise an offenen Profilen als auch an geschlossenen Seiten von offenen Profilen oder rundum geschlossenen Profilen verwendet werden, da der Abstandshalter dann in die zurückgezogene Position gedrückt wird und für die Befestigung an dieser Stelle keine technische Funktion mehr besitzt, aber die Montage auch nicht behindert. Vielmehr drückt der Abstandshalter in der zurückgezogenen Position gegen das Profil und sorgt über die Klemmkräfte für eine Vorfixierung des Verbinders an dem Profil.

Für eine einfache Herstellung des Verbinders ist das Zwischenstück vorzugsweise aus Kunststoff hergestellt und der Abstandshalter integral an dem Zwischenstück angeformt. Um ausreichend Druckkräfte aufnehmen zu können, ist der Abstandshalter plattenförmig ausgebildet und über biegbare Laschen an dem Zwischenstück gehalten, sodass der Abstandshalter nach Überwindung der Federkräfte der biegbaren Laschen in die zurückgezogene Position bewegt werden kann.

Gemäß einer vorteilhaften Ausgestaltung der Erfindung weisen die Platten drei winklig zueinander angeordnete äußere Kanten auf, sodass über die Verbinder die Profile in unterschiedlichen Winkeln montiert werden können. Vorzugsweise ist zumindest eine Montage in Winkeln von 45° und 90° möglich.

Vorzugsweise ist das Zwischenstück über mindestens eine Rastverbindung mit den Platten verbunden. Dadurch kann der Verbinder als Einheit vormontiert werden und die Platten sowie das Zwischenstück sind mit etwas Spiel aneinander gehalten und können bei der Montage nicht versehentlich auseinanderfallen. Hierfür können an dem Zwischenstück ein oder mehrere hervorstehende Zapfen mit einem verdickten Endabschnitt ausgebildet sein, die zur Herstellung einer Rastverbindung durch eine Öffnung in der jeweiligen Platte durchführbar ist.

Gemäß einer weiteren Ausführungsform der Erfindung ist das Zwischenstück entlang einer Mittelebene zwischen den Platten geteilt ausgebildet. Dabei können beide Teile des Zwischenstückes baugleich ausgeführt sein und zur Bildung des Zwischenstückes zusammengesteckt werden, sodass für die beiden Teile des Zwischenstückes nur ein Werkzeug erforderlich ist.

Erfindungsgemäß wird auch eine Verbindungsanordnung mit zwei Profilen bereitgestellt, die über einen Verbinder miteinander verbunden sind, wobei mindestens ein Profil c-förmig ausgebildet ist und der Abstandshalter in die offene Seite des Profils eingefügt ist. Der Abstandshalter sorgt somit für eine Stabilisierung der sich gegenüberliegenden Seitenwände des Profils und verhindert eine übermäßige Deformierung in dem Bereich der Verbindung. Vorzugsweise sind die Platten dabei über eine Schraube zusammengezogen und der Abstandshalter form- und kraftschlüssig in dem Profil aufgenommen.

Die Erfindung wird nachfolgend anhand von mehreren Ausfiihrungsbeispielen mit Bezug auf die beigefügten Zeichnungen näher erläutert. Es zeigen:

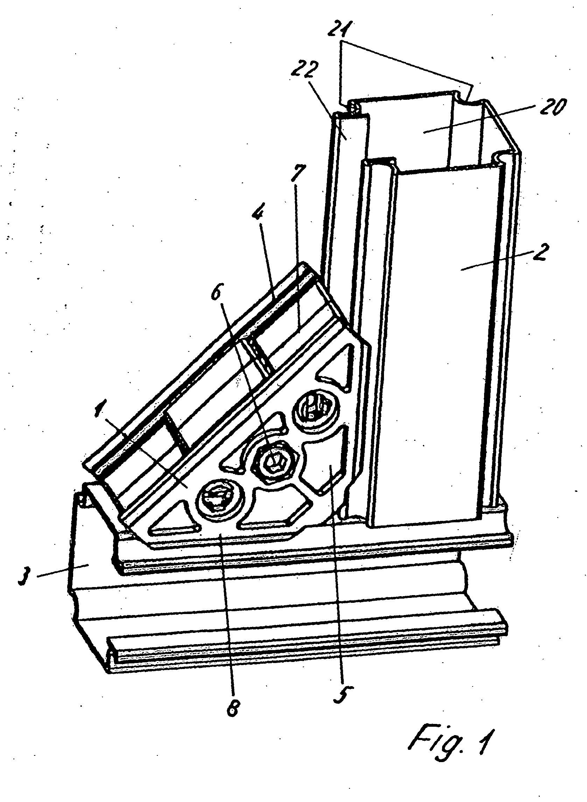

- Figur 1: eine perspektivische Ansicht eines erfindungsgemäßen Verbinders gemäß einer ersten Ausführungsform im montierten Zustand;
- Figur 2: eine geschnittene Seitenansicht des Verbinders der Figur 1;
- Figur 3: eine perspektivische Ansicht des Verbinders der Figur 1;
- Figur 4: eine perspektivische Explosionsdarstellung des Verbinders der Figur 1;
- Figur 5: eine perspektivische Ansicht eines Verbinders gemäß einem zweiten Ausführungsbeispiel;
- Figur 6: eine geschnittene Seitenansicht des Verbinders der Figur 5;
- Figur 7: eine Seitenansicht auf einen erfindungsgemäßen Verbinder in einer weiteren Montageposition, und
- Figur 8: eine geschnittene Ansicht entlang der Linie A-A der Figur 7.

Ein Verbinder 1 ist an einem vertikalen Profil 2 und einem rechtwinklig dazu angeordneten horizontalen Profil 3 festgelegt. Der Verbinder 1 umfasst zwei einander gegenüberliegende Platten 4 und 5 aus Metall, vorzugsweise aus Zink-Druckguss oder verzinktem Blech und ein Zwischenstück 7 aus Kunststoff. Die Platten 4 und 5 sind über eine Schraube 6 aneinandergehalten, wobei an der Platte 5 der Kopf der Schraube 6 aufgenommen ist und an der Platte 4 ein eingepresstes Gewinde bzw. eine Mutter vorgesehen ist.

Das Profil 2 ist als offenes c-förmiges Profil ausgebildet und umfasst drei Seitenwände 20 die im Eckbereich jeweils eine rund ausgebildete Nut 21 besitzen. An der offenen Seite des Profils 2 liegen sich benachbart zur Nut 21 jeweils zwei Wandabschnitte 22 beabstandet voneinander gegenüber. Der Verbinder 1 ist an dem Profil 2 an der offenen Seite montiert, während das horizontale Profil 3 zwar baugleich zu dem Profil 2 ausgebildet ist, hier ist jedoch der Verbinder 1 an einer geschlossenen Seite des Profils 3 montiert.

Hierfür greifen an drei äußeren Kanten 8 vorgesehene Vorsprünge in die Nuten 21 der jeweiligen Profile 2 und 3 ein und legen den Verbinder 1 somit an den Profilen 2 und 3 klemmend fest.

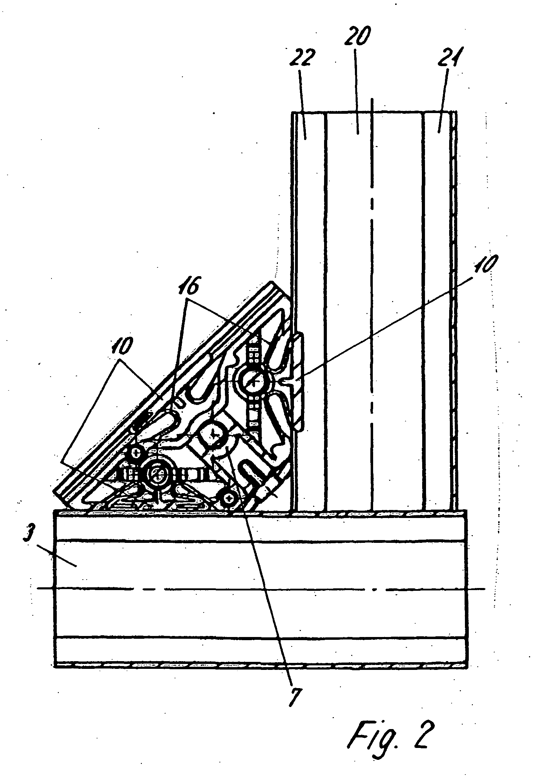

Wie in Figur 2 zu sehen ist, sind an dem Zwischenstück 7 zwischen den äußeren Kanten 8 Abstandshalter 10 angeordnet, die über Laschen 16 elastisch an dem Zwischenstück 7 angeformt sind. Das Zwischenstück 10 ist im Bereich des vertikalen Profils 20 in einer hervorstehenden Position angeordnet und liegt an den gegenüberliegenden Abschnitten 22 kraft- und formschlüssig an, sodass das Profil 2 durch Einfügung des Abstandshalters 10 verstärkt ist. Durch Zusammendrücken der Platten 4 und 5 mittels der Schraube 6 können die Abschnitte 22 nur soweit zusammengedrückt werden, bis sie an dem Abstandshalter 10 anliegen.

Für eine Montage des Verbinders 1 an einer geschlossenen Seite eines c-förmigen Profils 3 oder eines vollkommen geschlossenen Profils lässt sich der Abstandshalter 10 in eine zurückgezogene Position drücken. Dann werden die elastischen Laschen 16 in das Zwischenstück 7 gedrückt und der Abstandshalter 10 liegt flächig an einer Außenfläche einer Seitenwand eines Profils 3 an.

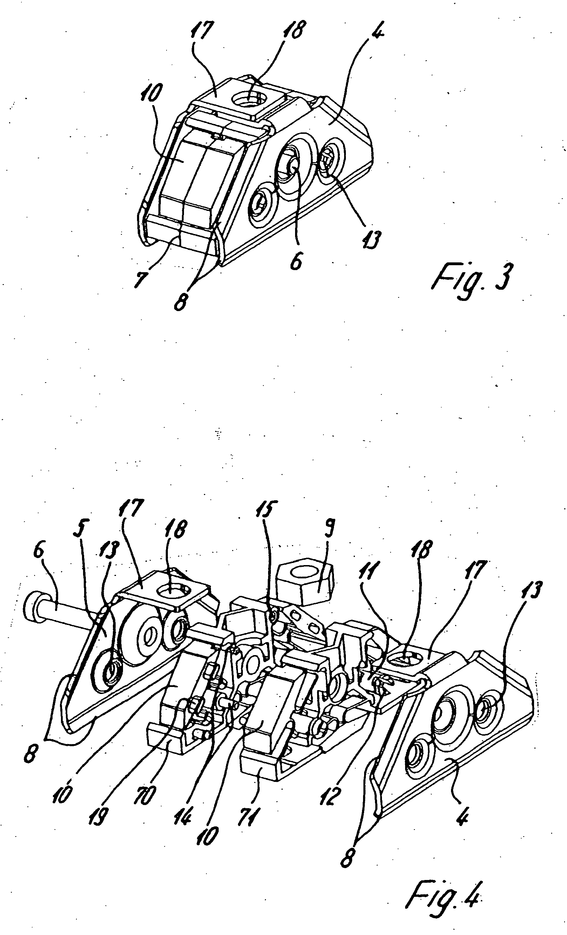

In Figur 3 ist der Verbinder 1 als vormontierte Einheit dargestellt. Die Platten 4 und 5 weisen jeweils drei winklig zueinander angeordnete äußere Kanten 8 auf, die in einem Winkel von 45 bzw. 90° zueinander angeordnet sind. Dadurch kann der Verbinder Profile 2, 3 in Winkeln von 45, 90 und 180° miteinander verbinden.

Wie insbesondere in Figur 4 zu sehen ist, ist das Zwischenstück 7 zweiteilig ausgebildet und umfasst einen ersten Teil 70 und einen zweiten Teil 71, die ineinandersteckbar sind. Hierfür sind an einer Seite des Teils 70 Zapfen 14 ausgebildet, die in gegenüberliegende Öffnungen eingreifen. An dem Teil 71 sind gleiche Zapfen 14 ausgebildet, die dann in eine Öffnung 15 an dem Teil 70 eingreifen. Die Teile 70 und 71 sind baugleich ausgeführt und können somit mit einem Werkzeug gefertigt werden.

An der Platte 4 und 5 sind ferner Öffnungen 13 vorgesehen, in die Rastmittel zur Vorfixierung der Platten 4 und 5 an dem Zwischenstück 7 einfügbar sind. Dabei sind an der zur Platte 4 bzw. 5 gewandten Seite des Zwischenstückes 7 Zapfen 11 ausgebildet, die einen verdickten Endabschnitt 12 aufweisen. Durch einen Schlitz ist der verdickte Endabschnitt 12 elastisch verformbar und kann somit in eine Öffnung 13 an einer Platte 4 oder 5 eingefügt werden und rastet dann derart ein, dass die Platte 4 bzw. 5 vorfixiert an dem Zwischenstück 7 gehalten ist.

Ferner sind an den Platten 4 und 5 an einem oberen Abschnitt ein rechtwinklig zur Platte 4 bzw. 5 angeordneter Flansch 17 ausgebildet, dem eine Öffnung 18 ausgespart ist. Hierdurch gibt sich eine weitere Befestigungsmöglichkeit an dem Verbinder 1. Dabei wird eine Mutter 9 an dem Verbinder eingelegt und beispielsweise eine Schraube durch die Öffnung 19 in die Mutter 9 eingedreht.

Der Abstandshalter 10 ist im wesentlichen plattenförmig ausgebildet und umfasst eine Ebene Anlagefläche, an der die Abschnitte 22 anliegen. Zur Verbindung der Abstandshalter 10 sind Vorsprünge 19 ausgebildet, die in entsprechende Ausnehmungen an dem anderen Teil des Abstandshalters 10 eingreifen.

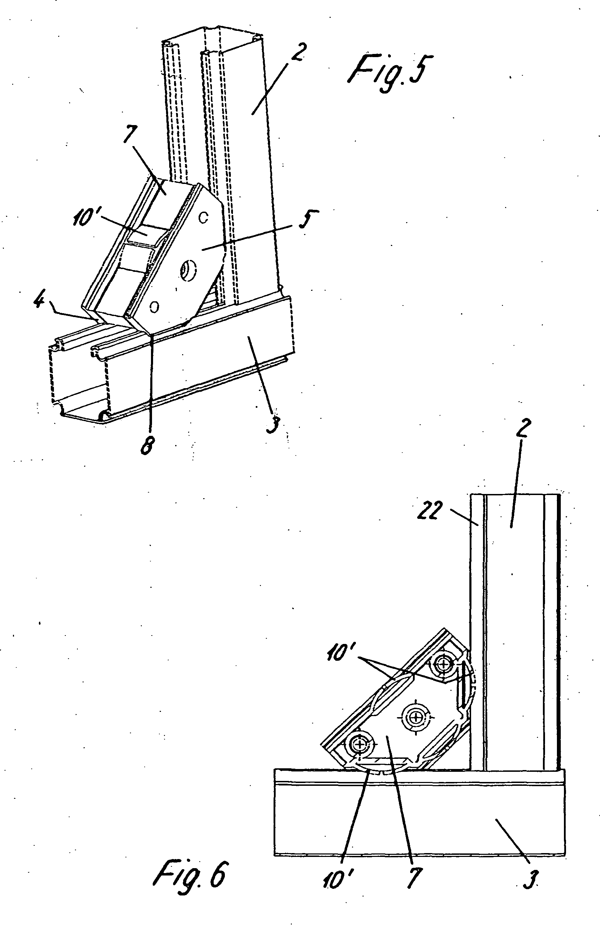

In Figur 5 ist eine weitere Ausführungsform eines erfindungsgemäßen Verbinders gezeigt, der einen modifizierten Abstandshalter 10' aufweist. Der Verbinder umfasst zwei metallische Platten 4 und 5, zwischen denen ein Zwischenstück 7 angeordnet ist. Der Abstandshalter 10' ist durch zwei winklig hervorstehende Platten gebildet, die elastisch von einer hervorstehenden Position in eine zurückgezogene Position bewegt werden können.

Wie in Figur 6 gezeigt ist, lässt sich der Verbinder 1 an der offenen Seite von Profilen 2 und 3 montieren, wobei die Abstandshalter 10' zwischen die Abschnitte 22 eingreifen und somit eine stützende Funktion besitzen. Durch die elastische Ausbildung der Abstandshalter 10' ist es auch möglich, den Verbinder an der Seite eines geschlossenen Profils 2 bzw. 3 zu montieren.

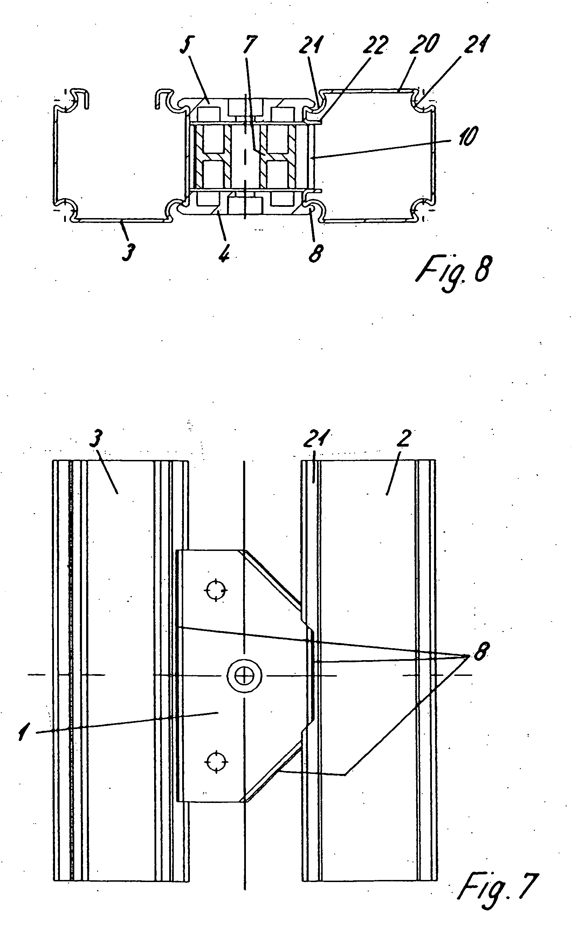

Bei dem in Figur 7 dargestellten Ausführungsbeispiel sind zwei Profile 2 und 3 parallel zueinander angeordnet und über einen Verbinder 1 aneinander gehalten. Hierfür weist der Verbinder 1 nicht nur drei äußere Kanten 8 auf, sondern besitzt vier äußere Kanten 8, die winklig zueinander angeordnet sind. Die Kanten 8 greifen im montierten Zustand jeweils in eine Nut 21 am Profil 2 bzw. 3 ein.

Bei den dargestellten Ausführungsbeispielen ist jeweils eine Schraube 6 vorgesehen, um die Platten 4 und 5 miteinander zu verbinden. Es ist auch möglich, mehrere Schrauben 6 vorzusehen. Statt einer Schraube 6 kann auch ein mit einem Gewinde versehener Schnellverschluss eingesetzt werden.

Ferner kann die Anzahl der äußeren Kanten 8 pro Platte variiert werden. Für Standardanwendungsfälle werden drei äußere Kanten 3 pro Platte 4 bzw. 5 ausreichen. Um weitere Anwendungsfälle abdecken zu können, lassen sich jedoch auch mehr als drei Kanten 8 vorsehen.

## Patentansprüche

1. Verbinder (1) für Profile (2, 3), insbesondere für Profile zur Herstellung von Sanitärinstallationen, mit zwei einander gegenüberliegenden Platten (4, 5), die über mindestens eine Schraube (6) und ein Zwischenstück (7) miteinander verbunden sind und klemmend an einem Profil (2, 3) festlegbar sind, wobei an äußeren Kanten (8) der Platten (4, 5) Vorsprünge ausgebildet sind, die in Eingriff mit an den Profilen (2, 3) vorgesehenen Nuten (21) bringbar sind, **dadurch gekennzeichnet, dass** an dem Zwischenstück (7) zwischen den äußeren Kanten (8) der Platten (4, 5) mindestens ein hervorstehender Abstandshalter (10, 10') angeordnet ist, der zur Abstützung eines offenen Profils (2, 3) zwischen zwei gegenüberliegenden Wandabschnitten (22) des jeweiligen offenen Profils (2, 3) einfügbar ist, wobei der Abstandshalter (10, 10') federnd ausgebildet ist und zur Anordnung an einer geschlossenen Seite eines der offenen Profile (2, 3) von einer hervorstehenden Position in eine zurückgezogene Position bewegbar ist.

2. Verbinder nach Anspruch 1, **dadurch gekennzeichnet, dass** das Zwischenstück (7) aus Kunststoff hergestellt ist und der Abstandshalter (10, 10') integral an dem Zwischenstück (7) angeformt ist.

3. Verbinder nach Anspruch 1 oder 2, **dadurch gekennzeichnet, dass** der Abstandshalter (10) plattenförmig ausgebildet ist und über biegbare Laschen (16) an dem Zwischenstück (7) gehalten ist.

4. Verbinder nach einem der Ansprüche 1 bis 3, **dadurch gekennzeichnet, dass** die Platten (4, 5) drei winklig zueinander angeordnete äußere Kanten (8) aufweisen.

5. Verbinder nach einem der Ansprüche 1 bis 4, **dadurch gekennzeichnet, dass** das Zwischenstück (7) über mindestens eine Rastverbindung (11, 12, 13) mit den Platten (4, 5) verbunden ist.

6. Verbinder nach einem der Ansprüche 1 bis 5, **dadurch gekennzeichnet, dass** an dem Zwischenstück (7) mindestens ein hervorstehender Zapfen (11) mit einem verdickten Endabschnitt (12) ausgebildet ist, der zur Herstellung einer Rastverbindung durch eine Öffnung (13) in der Platte (4, 5) durchführbar ist.

7. Verbinder nach einem der Ansprüche 1 bis 6, **dadurch gekennzeichnet, dass** das Zwischenstück (7) entlang einer Mittelebene zwischen den Platten geteilt ausgebildet ist.

8. Verbinder nach Anspruch 7, **dadurch gekennzeichnet, dass** beide Teile (70, 71) des Zwischenstückes (7) baugleich ausgeführt sind und zusammensteckbar sind.

9. Verbinder nach einem der Ansprüche 1 bis 8, **dadurch gekennzeichnet, dass** an mindestens einer der Platten (4, 5) ein Flansch (17) mit einer Öffnung (18) als weitere Befestigungsstelle für Bauteile vorgesehen ist.

10. Verbindungsanordnung mit zwei Profilen (2, 3), die über einen Verbinder (1) nach einem der Ansprüche 1 bis 9 miteinander verbunden sind, **dadurch gekennzeichnet, dass** mindestens ein Profil (2, 3) c-förmig ausgebildet ist und der Abstandshalter (10, 10') in die offene Seite des Profils (2, 3) eingefügt ist.

11. Verbindungsanordnung nach Anspruch 10, **dadurch gekennzeichnet, dass** die Platten (4, 5) über eine Schraube (6) zusammengezogen sind und der Abstandshalter (10, 10') form- und kraftschlüssig in dem Profil (2, 3) aufgenommen ist.

## Claims

1. A connector (1) for profiles (2, 3) in particular for producing sanitary installations, comprising two plates (4, 5) opposed to each other and connected through at least one screw (6) and an intermediate element (7), which can be fixed to a profile (2, 3) in a clamping manner, the outer edges (8) of the plates being formed with projections which are engageable with grooves (21) provided on the profiles (2, 3), **characterized in that** on the intermediate element (7) there is provided at least one protruding spacer (10, 10') between the outer edges (8) of the plates (4, 5) which is insertable between two opposed wall sections (22) of the respective open profile (2, 3) for support, the spacer (10, 10') being resilient and moveable from a protruding position to a retracted position for arrangement on a closed side of the open profile (2, 3).

2. A connector as claimed in claim 1, **characterized in that** the intermediate element (7) is made of plastic, the spacer (10, 10') being formed integrally on the intermediate element (7).

3. A connector as claimed in claim 1 or 2, **characterized in that** the spacer (10) is provided in form of a plate and supported on the intermediate element (7) through bendable links (16).

4. A connector as claimed in one of claims 1 to 3, **characterized in that** the plates (4, 5) have three outer edges arranged in an angular relation to each other.

5. A connector as claimed in one of claims 1 to 4, **characterized in that** the intermediate element (7) is connected with the plates (4, 5) through at least one locking connection (11, 12, 13).

6. A connector as claimed in one of claims 1 to 5, **characterized in that** on the intermediate element (7) at least one protruding peg (11) having an enlarged terminal portion (12) is provided which can be inserted through an opening (13) in the plate (4, 5) for creating a locking connection.

7. A connector as claimed in one of claims 1 to 6, **characterized in that** the intermediate element (7) is formed split along a center plane between the plates.

8. A connector as claimed claim 7, **characterized in that** both parts (70, 71) of the intermediate element (7) are built identically and can be connected through a plug-in connection.

9. A connector as claimed in one of claims 1 to 8, **characterized in that** on at least one of the plates (4, 5) a flange is provided having an opening (18) as an additional fastening point for components.

10. Connecting assembly with two profiles (2, 3) connected to each other by means of a connector as claimed in one of claims 1 to 9, **characterized in that** at least one profile (2, 3) is formed C-shaped and that the spacer (10, 10') is inserted into the open side of the profile (2, 3).

11. Connecting assembly as claimed in claim 10, **characterized in that** the plates (4, 5) are drawn together by means of a screw (6) and that the spacer (10, 10') is received in the profile (2, 3) in a form-fit and a non-positive fit.

## Revendications

1. Connecteur (1) pour profilés (2, 1), en particulier pour profilés destinés à la fabrication d'installations sanitaires, avec deux plaques (4, 5), qui sont reliées l'une à l'autre au moyen d'au moins une vis (6) et d'une pièce intermédiaire (7), et peuvent être fixées par serrage à un profilé (2, 3), des saillies étant formées sur les bords extérieurs (8) des plaques (4, 5), lesquelles peuvent s'engager dans des rainures (21) qui sont prévues sur les profilés (2, 3), **caractérisé en ce que**, sur la pièce intermédiaire (7), entre les bords extérieurs (8) des plaques (4, 5), est agencé au moins un écarteur (10, 10') faisant saillie, qui, pour soutenir un profilé ouvert (2, 3), peut être inséré entre deux sections de parois (22) du profilé ouvert concerné (2, 3) qui sont situées l'une en face de l'autre, l'écarteur (10, 10') faisant ressort et pouvant être mû entre une position en saillie et une position en retrait pour être disposé sur un côté fermé de l'un des profilés ouverts (2, 3) .

2. Connecteur selon la revendication 1, **caractérisé en ce que** la pièce intermédiaire (7) est fabriquée en matière synthétique et que l'écarteur (10, 10') est formé d'une pièce avec la pièce intermédiaire.

3. Connecteur selon revendication 1 ou 2, **caractérisé en ce que** l'écarteur (10) est réalisé en forme de plaque et est maintenu sur la pièce intermédiaire (7) au moyen de pattes flexibles (16).

4. Connecteur selon l'une des revendications 1 à 3, **caractérisé en ce que** les plaques (4, 5) présentent trois bords extérieurs (8) qui sont disposés en formant un angle les uns par rapport aux autres.

5. Connecteur selon l'une des revendications 1 à 4, **caractérisé en ce que** la pièce intermédiaire (7) est reliée aux plaques (4, 5) par l'intermédiaire d'au moins un système d'encliquetage (11, 12, 13).

6. Connecteur selon l'une des revendications 1 à 5, **caractérisé en ce que**, sur la pièce intermédiaire (7), est formée au moins une broche en saillie (11) présentant une section finale (12) plus épaisse qui peut être introduite par une ouverture dans la plaque (4, 5) pour la réalisation d'un encliquetage.

7. Connecteur selon l'une des revendications 1 à 6, **caractérisé en ce que** la pièce intermédiaire (7) est divisée le long d'un plan médian entre les plaques.

8. Connecteur selon la revendication 7, **caractérisé en ce que** les deux parties (70, 71) de la pièce intermédiaire (7) sont de construction identique et peuvent être emboîtées l'une dans l'autre.

9. Connecteur selon l'une des revendications 1 à 8, **caractérisé en ce qu'**une bride (17), pourvue d'une ouverture (18), est prévue sur au moins l'une des plaques (4, 5), en tant que pièce de fixation supplémentaire pour des composants.

10. Ensemble de connexion avec deux profilés (2, 3) qui sont reliés l'un à l'autre au moyen d'un connecteur (1) selon l'une des revendications 1 à 9, **caractérisé en ce que** l'un des profilés (2, 3) au moins est réalisé en forme de C et que l'écarteur (10, 10') est inséré dans le côté ouvert du profilé (2, 3).

11. Ensemble de connexion selon la revendication 10, **caractérisé en ce que** les plaques (4, 5) sont serrées ensemble au moyen d'une vis (6), et que l'écarteur (10, 10') est reçu par emboîtement et par frottement dans le profilé (2, 3).
